# NEUE EUROPÄISCHE PATENTSCHRIFT

(11) **EP 2 985 130 B2**
(45) Veröffentlichungstag und Bekanntmachung des Hinweises auf die Entscheidung über den Einspruch: **06.07.2022**
(45) Hinweis auf die Patenterteilung: 07.02.2018
(21) Anmeldenummer: 15181000.9
(22) Anmeldetag: 13.08.2015
(51) Int. Cl.: B29C 49/42

(54) **VORRICHTUNG UND VERFAHREN ZUM UMFORMEN VON KUNSTSTOFFVORFORMLINGEN ZU KUNSTSTOFFBEHÄLTNISSEN**
FORMING DEVICE FOR FORMING PLASTIC PREFORMS INTO PLASTIC CONTAINERS
DISPOSITIF DE TRANSFORMATION D'EBAUCHES EN MATIERE PLASTIQUE EN RECIPIENTS EN MATIERE PLASTIQUE

(30) Priorität: 13.08.2014 DE 102014111590
(43) Veröffentlichungstag der Anmeldung: 17.02.2016
(73) Patentinhaber: Krones AG, 93073 Neutraubling (DE)
(72) Erfinder: Voth, Klaus, 93073 Neutraubling (DE)
(74) Vertreter: Bittner, Bernhard

(56) Entgegenhaltungen:
- EP-A1- 2 388 129
- EP-A2- 2 422 955
- EP-A2- 2 422 956
- WO-A1-2010/130467
- CA-A- 1 044 417
- US-A1- 2010 203 187
- US-A1- 2011 287 126
- US-A1- 2014 097 561
- Anonymous: "Servomotor - Wikipedia", , 7 March 2017 (2017-03-07), XP055396727, Retrieved from the Internet: URL:https://de.wikipedia.org/wiki/Servomot or [retrieved on 2017-08-07]
- Anonymous: "Linearmotor - Wikipedia", , 18 January 2017 (2017-01-18), XP055396728, Retrieved from the Internet: URL:https://de.wikipedia.org/wiki/Linearmo tor [retrieved on 2017-08-07]

## Beschreibung

Die vorliegende Erfindung betrifft eine Vorrichtung zum Umformen von Kunststoffvorformlingen zu Kunststoffbehältnissen sowie ein Verfahren zum Umformen von Kunststoffvorformlingen zu Kunststoffbehältnissen gemäß dem jeweiligen Oberbegriff der Patentansprüche 1 und 11. Solche Vorrichtungen und Verfahren werden in US2011287126 und EP2388129 offenbart.

Vorrichtungen und Verfahren mit elektrischen Linearantrieben von Formteilen werden in WO2010130467, US2010203187 und KR100731897B1 offenbart. Insbesondere betrifft die vorliegende Anmeldung also eine Vorrichtung zum Umformen von Kunststoffvorformlingen zu Kunststoffbehältnissen, welche wenigstens eine Blasform umfasst, wobei die Blasform wiederum ein erstes Formteil und ein zweites Formteil umfasst. Dabei ist das erste Formteil und das zweite Formteil zwischen einer geschlossenen Stellung und einer geöffneten Stellung bezüglich einander mittels einer ersten Antriebseinrichtung bewegbar, und wobei die Blasform ein Bodenteil umfasst, welches gegenüber den Formteilen entlang einer zur Längsachse der Formteile parallel verlaufenden Hubrichtung beweglich ist, um einen Hohlraum, in der geschlossenen Stellung, in der Hubrichtung abzuschließen, und wobei innerhalb des Hohlraums ein Kunststoffvorformling unmittelbar mit einem gasförmigen Medium Druck beaufschlagbar ist.

Beispielsweise zeigt die Druckschrift EP 2 199 061 A1 ebenso eine Vorrichtung zum Umformen von Kunststoffvorformlingen zu Kunststoffbehältnissen. Insbesondere zeigt diese Druckschrift ebenso einen Antrieb, welcher zum Heben bzw. Senken eines Bodenteils, der in dieser Druckschrift gezeigten Blasformvorrichtung dient. Allerdings macht es sich der in dieser Druckschrift gezeigte Antrieb zu Nutze, die Steuerung des Bodenteils mittels mechanischer Führungskurven zu realisieren.

Der gesamte Blasvorgang weist jedoch noch eine Vielzahl weiterer mechanischer Bewegungen auf, etwa die Ent- und Verriegelungsbewegung des Formträgers oder die Bewegung der Blasdüse, sodass eine Kopplung der einzelnen Bewegungen und deren Antriebe dazu genutzt werden kann, die Prozessabläufe zu beschleunigen. Dies ist insbesondere dann wichtig, wenn ein schnelles Umstellen auf unterschiedliche Behältnisgrößen erforderlich ist, was bekanntermaßen bei der Verwendung von mechanischen Führungskurven sehr aufwendig ist.

Entsprechend der vorliegenden Erfindung haben die Erfinder jedoch abweichend von dem oben genannten Stand der Technik erkannt, dass ein derartiges schnelleres und kostengünstiges Umstellen auf verschiedene Behältnisgattungen und größen bereits dann möglich ist, wenn ein Bodenteil relativ zu dem ersten und dem zweiten Formteil individuell und zeitsparend einstellbar ist.

Insbesondere beruht nämlich die vorliegende Erfindung unter anderem auf der Erkenntnis, dass ein Bodenteil einer Blasformvorrichtung stets einen vorzugsweise gleichen Abstand zu einer Unterkante eines Stützrings eines einzusetzenden Kunststoffvorformlings haben sollte. Wird beispielsweise ein kleinerer Behälter, beispielsweise ein kleinerer Preform in die Form eingegeben, so erhöht sich ein Abstand zwischen dem Bodenteil und einem Boden eines solchen Behälters entsprechend unerwünscht. Dieser erhöhte Abstand wird nach dem Stand der Technik, und beispielsweise alternativ zur EP 2 199 961 A, mit einem Abstandsstück überbrückt. Ein derartiges Abstandsstück muss jedoch jeweils separat für individuelle Behältnisgrößen in aufwendiger Art und Weise an und/oder auf dem Bodenteil zuerst positioniert werden. Mithin ist auch ein derartiges, Verfahren sehr aufwendig.

Ausgehend hiervon ist es daher eine Aufgabe der vorliegenden Erfindung, die oben genannten Probleme zu überwinden und insofern eine Vorrichtung zum Umformen von Kunststoffvorformlingen zur Verfügung zu stellen, welche in kostengünstiger und gleichzeitig zeitsparender Art und Weise ermöglicht, eine Blasformanordnung auf andere Behältnisgrößen umzustellen.

Diese Aufgabe wird erfindungsgemäß durch eine Vorrichtung nach Anspruch 1 gelöst. Vorteilhafte Ausführungsformen und Weiterbildungen sind Gegenstand der Unteransprüche.

Um nun eine Vorrichtung zum Umformen von Kunststoffvorformlingen zur Verfügung zu stellen, welche sowohl in kostengünstiger Art und Weise als auch zeitsparend ein besonders individuelles Umstellen der Vorrichtung auf verschiedene auszublasende Behältnisse, insbesondere Kunststoffvorformlinge, anzubieten, macht die vorliegende Erfindung unter anderem von der Idee Gebrauch, eine zweite Antriebseinrichtung zu verwenden, welche in Form eines elektrischen Linearantriebs ausgestaltet ist, welche dafür eingerichtet und dazu vorgesehen ist, das Bodenteil relativ zu den Formteilen in Hubrichtung zu bewegen.

Mit anderen Worten umfasst daher die Vorrichtung zum Umformen von Kunststoffvorformlingen zu Kunststoffbehältnissen diese zweite, elektrische Antriebseinrichtung.

Es wurde daher insbesondere erkannt, dass die Verwendung eines elektrischen Linearantriebs nicht nur dem Grundsatz nach eine besonders konstruktiv einfach aufgebaute Antriebseinrichtung darstellt, sondern dass ein derartiger elektrischer Linearantrieb zudem besonders zuverlässig zum Antreiben des Bodenteils in die Hubrichtung genutzt werden kann.

Somit ist auf von einem elektrischen Linearantrieb abweichendem Antrieb für das Bodenteil, beispielsweise einem pneumatischen (Linear-)antrieb und/oder auf mechanische Führungskurven zur Bewegung des Bodenteils, vollständig verzichtet. Insbesondere kann auch nur das Bodenteil mittels eines elektrischen Antriebs, beispielsweise mittels des hier beschriebenen elektrischen Linearantriebs, angetrieben werden, wobei die erste Antriebseinrichtung abweichend von der zweiten Antriebseinrichtung eine solche sein kann, welche mechanische Führungskurven zum Öffnen und Schließen der Formteile umfasst.

Alternativ hierzu ist jedoch ebenso denkbar, dass die erste Antriebseinrichtung ebenso wie die zweite Antriebseinrichtung wiederum ein elektrischer Antrieb ist. Ein Kernelement der vorliegenden Erfindung ist es jedenfalls, dass zumindest die zweite Antriebseinrichtung in Form des obig beschriebenen elektrischen Linearantriebs ausgestaltet ist.

Mittels des hier beschriebenen elektrischen Linearantriebs kann nämlich das Bodenteil auch besonders einfach und kontrolliert durch Einprägung von elektrischer Energie innerhalb oder an den Linearantrieb relativ zu den Formteilen gehoben und gesenkt werden. Der Linearantrieb hat nämlich grundsätzlich dann entscheidende Vorteile, wenn eine Arretierung verschiedener Teile zueinander kupplungs- und/oder übersetzungsfrei zur Feinjustage vorgenommen werden sollte.

Erfindungsgemäß umfasst die Vorrichtung zum Umformen von Kunststoffvorformlingen zu Kunststoffbehältnissen wenigstens eine Blasform, wobei die Blasform wiederum ein erstes Formteil und ein zweites Formteil umfasst, wobei das erste Formteil und das zweite Formteil zwischen einer geschlossenen Stellung und einer geöffneten Stellung bezüglich einander mittels einer ersten Antriebseinrichtung bewegbar sind, und wobei die Blasform ein Bodenteil umfasst, welches gegenüber den Formteilen entlang einer zur Längsachse der Formteile parallel verlaufenden Hubrichtung beweglich ist, um einen Hohlraum, in der geschlossenen Stellung, in der Hubrichtung abzuschließen, und wobei innerhalb des Hohlraums ein Kunststoffvorformling unmittelbar mit einem gasförmigen Medium Druck beaufschlagbar ist. "Hubrichtung" ist daher eine Richtung, welche vorzugsweise parallel zu einer Haupterstreckungsrichtung der beiden Formteile ist. Die zweite Antriebseinrichtung umfasst zumindest einen, relativ zu einer gemeinsamen Drehachse der Formteile ortsfest positionierten, Stator sowie einen entlang und/oder innerhalb des Stators führbaren Läufer, wobei das Bodenteil an einem den Formteilen zugewandten Läuferende lösbar oder unlösbar in Form einer schwimmenden Lagerung positioniert ist.

Bei einer "schwimmenden Lagerung" wird beispielsweise je Seite nur eine Axialkraft in einer Richtung, vorzugsweise in der Hubrichtung, aufgenommen. Während bei einer herkömmlichen, angestellten Lagerung für einen betriebswarmen Zustand der Blasform Spielfreiheit oder Vorspannung angestrebt wird, wird bei der schwimmenden Lagerung ein gewisses Axialspiel um eine Achse parallel zur Hubrichtung, beispielsweise je nach Lagergröße mehrere Zehntel Millimeter, bewusst und gewollt in Kauf genommen.

Bei dieser Art der Lagerung verzichtet man daher auf eine enge axiale Führung. Insofern sollte das Axialspiel beim Einbau des Bodenteils und dem Anbringen des Bodenteils an den Läufer nicht so sorgfältig eingestellt werden, wie dies bei einer angestellten Lagerung der Fall wäre. Die Toleranzen werden daher so gelegt, dass das Lager zwischen dem Läufer und dem Bodenteil auch unter besonders ungünstigen thermischen Verhältnissen (besonders schnelle Erwärmung und/oder Abkühlung) nicht axial verspannt. Mit anderen Worten sorgt eine derartige schwimmende Lagerung dafür, dass ein Lager zwischen dem Bodenteil und dem Läufer frei von mechanischen Verspannungen ist. Der Läufer ist stufenlos entlang und/oder innerhalb des Stators hin- und her beweglich. Mit anderen Worten ermöglicht daher der obig beschriebene Linearantrieb nicht nur ein besonders einfaches, insbesondere auch direktes und reibungsarmes Justieren des Bodenteils relativ zu den Formteilen, sondern gewährleistet zudem in zumindest einer Ausführungsform über die stufenlose Hin- und Herbeweglichkeit des Läufers eine noch viel weiter gehende Feinjustage des Bodenteils relativ zu den Formteilen. Gemäß zumindest einer Ausführungsform ist der Stator feststehend, während der Läufer direkt mit dem Bodenteller verbunden ist und bewegt wird. Der Stator kann hierzu lösbar oder unlösbar an einer ortsfest angeordneten Halterung angeordnet sein, wobei die Halterung zumindest mittelbar, ebenso eine Halterung für die zweite Antriebseinrichtung ist. "Zumindest mittelbar" bedeutet in diesem Zusammenhang, dass entweder die Halterung unmittelbar mit der zweiten Antriebseinrichtung verbunden ist oder aber, dass zwischen der Halterung und der zweiten Antriebseinrichtung zumindest ein oder mehrere Verbindungselemente angebracht sind. Insofern stehen bei einer unmittelbaren Anordnung der zweiten Antriebseinrichtung an der Halterung diese beiden auch in unmittelbarem Kontakt miteinander, während im Falle einer lediglich mittelbaren Anordnung zwischen der Halterung und der zweiten Antriebseinrichtung kein unmittelbarer Kontakt besteht. Dabei bezieht sich "ortsfest" darauf, dass die Halterung zwar beispielsweise entlang eines Transportweges mittransportiert werden kann, jedoch diese Halterung in ihrer Position relativ zu einer gemeinsamen Drehachse der Formteile auch während eines derartigen Weitertransports der Halterung entlang dieses Transportpfads nicht verändert werden kann.

Eine Halterung dient zu einem einfachen ortsfesten Positionieren des Stators sowie insbesondere auch zu einer stabilen Führung des Läufers relativ zu den Formteilen. Mittels der Halterung wird daher vermieden, dass während eines Transports der einzelnen Blasformen entlang des Transportweges sich die Position des Bodenteils derart verschiebt, dass dieses in einer Schließstellung der Blasform nicht mehr druckdicht mit den Formteilen den oben beschriebenen Hohlraum ausbilden kann.

Gemäß zumindest einer Ausführungsform ist neben dem Läufer zumindest ein Führungselement in Hubrichtung verschiebebeweglich oder entlang der Halterung angeordnet, wobei das Führungselement, insbesondere nur, eine Führung zum Entlangführen des Bodenteils in der Hubrichtung ist. Mit anderen Worten dient das hier beschriebene Führungselement nicht zum Antreiben des Bodenteils, sondern lediglich für eine richtungsgeführte Bewegung des Bodenteils relativ zu den beiden Formteilen. Insbesondere kann das Führungselement frei von einem Eingriff einer Antriebseinrichtung sein. Dies kann heißen, dass das hier beschriebene Führungselement zumindest einen Teil eines Gleitlagers bildet. Mit anderen Worten wird daher gemäß vorliegender Erfindung ausschließlich der Läufer elektrisch mittels des hier beschriebenen elektrischen Linearmotors angetrieben.

Gemäß zumindest einer Ausführungsform ist das Bodenteil zudem an einem den Formteilen zugewandten Führungselementende des Führungselements lösbar oder unlösbar, insbesondere in Form einer schwimmenden Lagerung, positioniert. Dabei ist es vorstellbar, dass daher das Bodenteil sowohl an dem Läufer als auch an dem Führungselement jeweils separat mittels einer schwimmenden Lagerung gelagert ist.

Des Weiteren ist denkbar, dass die Vorrichtung zum Umformen zumindest zwei derartige Führungselemente umfasst, welche in lateraler Richtung, das heißt in einer Richtung senkrecht zu der Hubrichtung beidseits von dem Stator oder dem Läufer angeordnet sein können.

Gemäß zumindest einer Ausführungsform sind der Läufer und/oder das Führungselement stabförmig ausgebildet, wobei zumindest das Führungselement in Hubrichtung vollständig durch die Halterung hindurchführbar ist.

Gemäß zumindest einer Ausführungsform ist eine Steuerung des Bodenteils abhängig von einer Steuerung der Formteile betrieben. Insofern kann die hier beschriebene Vorrichtung zum Umformen von Kunststoffvorformlingen zu Kunststoffbehältnissen zumindest eine separate Steuerung des Bodenteils sowie eine separate Steuerung der Formteile umfassen, wobei beide Steuerungen beispielsweise mittels einer Controller-Einheit in Datenkommunikation zueinander stehen. Insofern kann daher sowohl eine Schließbewegung jedoch auch eine Öffnungsbewegung der Formteile, bewegungssynchron mit einer Bewegung des Bodenteils in Hubrichtung erfolgen.

Alternativ hierzu ist jedoch auch denkbar, dass die Steuerung für das Bodenteil und die Steuerung der Formteile jeweils benutzerdefiniert und unabhängig voneinander die einzelnen Bewegungen steuern.

In einer weiteren Ausführungsform kann die Steuerung des Bodenhubs auch von der Steuerung der Blasstation übernommen werden, wodurch die Vorrichtung mit einer einzigen Steuerung je Blasstation auskommt, um sowohl die Formteile als auch das Bodenteil steuern zu können.

Insbesondere kann je Blasstation eine Steuereinheit zur Steuerung des Bodenteils vorgesehen sein.

Gemäß zumindest einer Ausführungsform umfasst die Vorrichtung eine Energiespeichereinrichtung, in welcher eine durch eine Bewegung des Bodenteils in Richtung weg von den Formteilen freigewordene mechanische und/oder elektrische Energie zumindest teilweise speicherbar ist und von der Energiespeichereinrichtung zum Erzeugen einer Hubbewegung des Bodenteils in Richtung der Formteile diese mechanische und/oder elektrische Energie wieder in die Antriebseinrichtung einspeisbar ist.

Mit anderen Worten ist mittels der hier beschriebenen Energiespeichereinrichtung in besonders einfacher Art und Weise ein Energierecycling realisiert, sodass über die hier beschriebene Energiespeichereinrichtung der elektrische Linearmotor, sofern überhaupt nötig, nur sehr stark energiereduziert mit externer Energie versorgt werden muss.

Des Weiteren betrifft die vorliegende Erfindung ein Verfahren zum Umformen von Kunststoffvorformlingen zu Kunststoffbehältnissen. Dabei sind alle für die obig beschriebene Vorrichtung offenbarten Merkmale ebenso für das hier beschriebene Verfahren beschriebene Merkmale offenbart und umgekehrt.

Gemäß zumindest einer Ausführungsform umfasst das hier beschriebene Verfahren zum Umformen von Kunststoffvorformlingen zu Kunststoffbehältnissen wenigstens eine Blasform, wobei die Blasform wiederum ein erstes Formteil und ein zweites Formteil umfasst, wobei das erste Formteil und das zweite Formteil mittels einer ersten Antriebseinrichtung von einem geöffneten in einen geschlossenen Zustand bewegt werden, und wobei die Blasform ein Bodenteil umfasst, welches gegenüber den Formteilen entlang einer zur Längsachse der Formteile parallel verlaufenden Hubrichtung bewegt wird, um einen Hohlraum in der geschlossenen Stellung in der Hubrichtung abzuschließen, und wobei innerhalb des Hohlraums ein Kunststoffvorformling unmittelbar mit einem gasförmigen Medium beaufschlagt wird.

Erfindungsgemäß wird dabei mittels wenigstens einer zweiten Antriebseinrichtung, welche in Form eines elektrischen Linearantriebs ausgestaltet ist, das Bodenteil relativ zu den Formteilen in der Hubrichtung bewegt.

Dabei weist das hier beschriebene Verfahren die gleichen vorteilhaften Ausgestaltungen und Vorteile auf, wie im Zusammenhang mit der obig beschriebenen Vorrichtung beschrieben.

Im Folgenden wird die hier beschriebene Vorrichtung sowie das hier beschriebene Verfahren anhand eines Ausführungsbeispiels und entsprechenden perspektivischen Ansichten näher erläutert.

Darin zeigen:
- Fig. 1: Schematische Draufsicht eines Ausführungsbeispiels einer hier beschriebenen Vorrichtung zum Umformen von Kunststoffvorformlingen zu Kunststoffbehältnissen;
- Fig. 2: eine schematische Seitenansicht eines Ausführungsbeispiels eines hier beschriebenen Blasmoduls und
- Fig. 3A-3C: schematische Seitenansichten verschiedener Stellungen eines Bodenteils, welches mittels eines Ausführungsbeispiels eines hier beschriebenen elektrischen Linearmotors angetrieben wird.

In dem Ausführungsbeispiel und den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

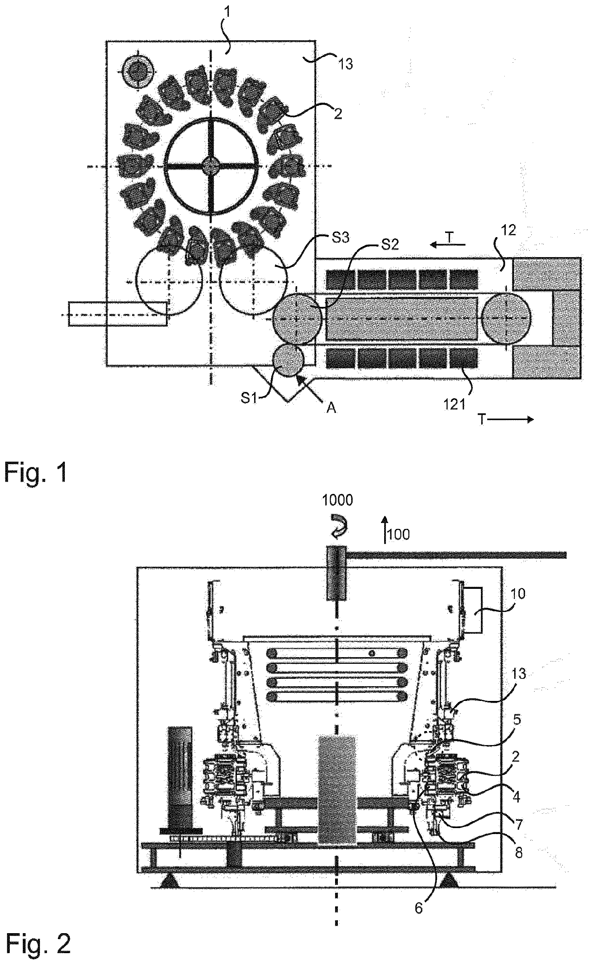

In der Fig. 1 ist anhand einer schematischen Draufansicht ein Ausführungsbeispiel einer hier beschriebenen Vorrichtung 1 zum Umformen von Kunststoffvorformlingen zu Kunststoffbehältnissen dargestellt. Wie aus der Fig. 1 unschwer entnommen werden kann, umfasst die Vorrichtung 1 zunächst ein Heizmodul 12 sowie ein Blasmodul 13. Zunächst werden daher an einem Eingang A Kunststoffvorformlinge transportiert und diese von einem Transportstern S1 aufgenommen, um durch Heizvorrichtungen 121 hindurchgeführt zu werden. Während des Hindurchführens werden daher die Kunststoffvorformlinge auf eine vorgebbare Vorwärmtemperatur gebracht. Nach dem Durchlaufen der Heizvorrichtung 121 in Transportrichtung T werden alsdann über weitere Transportsterne S2, S3 die Kunststoffvorformlinge, an jeweils den Kunststoffvorformlingen beispielsweise eindeutig zugeordneten Blasformen 2 übergeben. Innerhalb der Blasformen 2 werden somit die Kunststoffvorformlinge zu fertigen Containern ausgeblasen.

Wie in der Fig. 2 gezeigt, ist dort das in der Fig. 1 gezeigte Blasmodul 13 in einer schematischen Seitenansicht gezeigt. Gezeigt sind links und rechts von einer Drehachse 1000 dem Blasmoduls 13 angeordnete Blasformen 2, welche jeweils Teil einer Blasstation sind. Wiederum erkennbar ist, dass jede der einzelnen Blasstationen Formteile 4, 6 umfasst, wobei diese Formteile 4, 6 zwischen einer geschlossenen Stellung und einer geöffneten Stellung bezüglich einander mittels einer Antriebseinrichtung 5 bewegbar sind. Ein Bodenteil 7 ist gegenüber den Formteilen 4, 6 entlang einer zur Längsachse der Formteile 4, 6 parallel verlaufenden Hubrichtung 100, welche vorliegend parallel zu einer Drehachse der gesamten Blasstation ist, beweglich. Insbesondere wird die Bewegung des Bodenteils 7 in dieser Hubrichtung 100 relativ zu den Formteilen 4, 6 durch eine zweite Antriebseinrichtung 8 realisiert, wobei erfindungsgemäß diese zweite Antriebseinrichtung 8 in Form eines elektrischen Linearantriebs ausgestaltet ist.

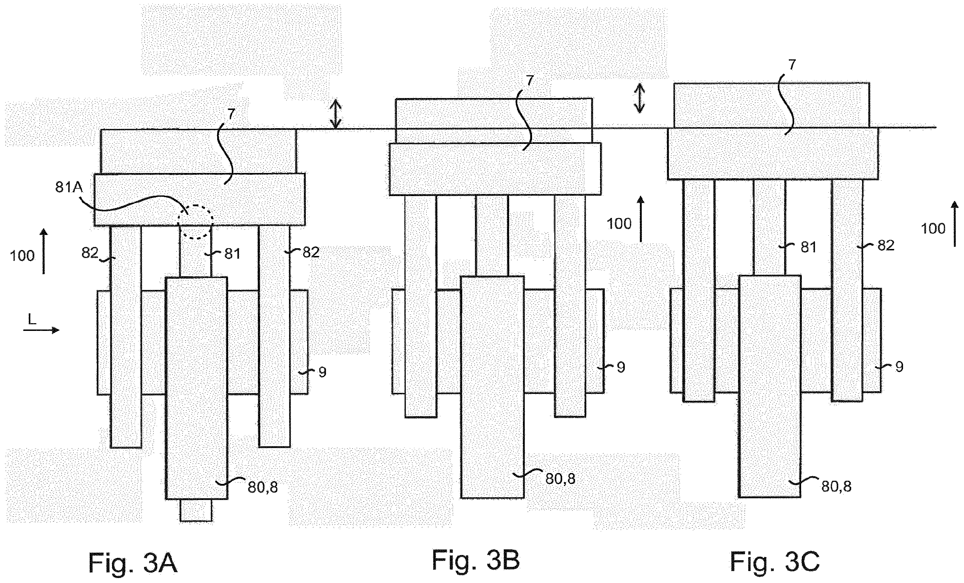

Die genauere Ausgestaltung der zweiten Antriebseinrichtung 8 in Form dieses elektrischen Linearantriebs ist des Weiteren in den schematischen Seitenansichten der Fig. 3A bis 3C entnehmbar.

Erkennbar ist nämlich, dass die zweite Antriebseinrichtung 8 einen relativ zur gemeinsamen Drehachse der Formteile 4, 6 ortsfest positionierten Stator 80 sowie einen entlang und innerhalb des Stators 80 führbaren Läufer 81 umfasst, wobei das Bodenteil 7 an einem den Formteilen 4, 6 zugewandten Läuferende 81A durch eine erfindungsgemäße schwimmende Lagerung positioniert ist. Dabei ist die in den Figuren 3A bis 3C erreichte stufenlose Gleitlagerung des Läufers 81 innerhalb des Stators 80 dadurch erreicht, dass der Läufer 81 in Form eines stabförmig ausgebildeten Elements gebildet ist. Der Läufer 81 ist nämlich in der Hubrichtung 100 vollständig durch den Stator 80, welcher insbesondere in Form einer Metallhülse ausgebildet sein kann, hindurchgeführt. Eine Haupterstreckungsrichtung des Stators 80 sowie eine Haupterstreckungsrichtung des Läufers 81 sind daher jeweils parallel zu der Hubrichtung 100. In lateraler Richtung L ist beidseits des Stators 80 und auch somit beidseits des Läufers 81 jeweils ein Führungselement 82 angeordnet, welches parallel zu dem Läufer 81 ausgerichtet ist. Mit anderen Worten sind wiederum ebenso eine Haupterstreckungsrichtung des Führungselements 82 und eine Haupterstreckungsrichtung sowohl des Stators 80 als auch des Läufers 81 parallel zueinander. Auch die beiden Führungselemente 82 sind daher mittels einer schwimmenden Lagerung mit dem Bodenteil 7 verbunden. Eine Haupterstreckungsrichtung des Bodenteils 7 ist daher vorzugsweise senkrecht zu den Haupterstreckungsrichtungen der oben genannten stabförmigen Elemente.

Wie unschwer aus der Fig. 3A erkannt werden kann, ist dort das Bodenteil 7 in einer unteren Endlage positioniert. Eine derartige untere Endlage des Bodenteils 7 entspricht daher auch einer vollständig geöffneten Blasform 2. Mit anderen Worten sind die Formteile 4, 6 und das Bodenteil 7 vollständig auseinandergefahren.

Bereits in der Fig. 3B beginnt jedoch ein aufeinander Zufahren des Bodenteils 7 in Richtung der beiden Formteile 4, 6, sodass sich das Bodenteil 7 bereits in der Fig. 3B in Hubrichtung 100 hebt. Entsprechend ist ebenso erkennbar, dass sowohl der Läufer 81 als auch die beiden Führungselemente 82, welche jeweils innerhalb einer Halterung 9 angeordnet sind, in Richtung der Hubbewegung 100 heben und auch durch die Halterung 9 selbst in der Hubrichtung 100 geführt werden, sodass eine obere Endlage ohne Weiteres durch eine derartige Gleitlagerung sowohl des Läufers 81 als auch der beiden Führungselemente 82 erreicht sein kann. In der oberen Endlage (siehe Fig. 3C) bilden daher das Bodenteil 7 und die zusammengefahrenen Formteile 4, 6 einen luftdichten Hohlraum aus, innerhalb dessen ein vorher eingebrachter Kunststoffvorformling zu einem Behältnis ausgeblasen werden kann.

### Bezugszeichenliste

- 1: Vorrichtung
- 2: Blasformen
- 4,6: Formteile
- 5: Antriebseinrichtung
- 7: Bodenteil
- 8: zweite Antriebseinrichtung
- 9: Halterung
- 10: Energiespeichereinrichtung
- 12: Heizmodul
- 13: Blasmodul
- 80: Stator
- 81: Läufer
- 81A: Läuferende
- 82: Führungselemente
- 100: Hubrichtung
- 1000: Drehachse des Blasmoduls
- 121: Heizvorrichtungen
- A: Eingang
- S1, S2, S3: Transportsterne
- T: Transportrichtung
- L: laterale Richtung

## Patentansprüche

1. Vorrichtung (1) zum Umformen von Kunststoffvorformlingen zu Kunststoffbehältnissen mit wenigstens einer Blasform (2), wobei die Blasform ein erstes Formteil (4) und ein zweites Formteil (6) umfasst, wobei das erste Formteil (4) und das zweite Formteil (6) zwischen einer geschlossenen Stellung und einer geöffneten Stellung bezüglich einander mittels einer ersten Antriebseinrichtung (5) bewegbar sind, und wobei die Blasform (2) ein Bodenteil (7) umfasst, welches gegenüber den Formteilen (4, 6) entlang einer zur Längsachse der Formteile (4, 6) parallel verlaufenden Hubrichtung (100) beweglich ist, um einen Hohlraum, in der geschlossenen Stellung, in der Hubrichtung (100) abzuschließen, und wobei innerhalb des Hohlraums ein Kunststoffvorformling unmittelbar mit einem gasförmigen Medium druckbeaufschlagbar ist, wobei
wenigstens eine zweite Antriebseinrichtung (8), welche in Form eines elektrischen Linearantriebs ausgestaltet ist, und welche dafür eingerichtet und dazu vorgesehen ist das Bodenteil (7) relativ zu den Formteilen (4, 6) in der Hubrichtung (100) zu bewegen vorgesehen ist, **dadurch gekennzeichnet, dass**
die zweite Antriebseinrichtung (8) zumindest einen, relativ zu einer gemeinsamen Drehachse der Formteile (4, 6) ortsfest positioniereten Stator (80), sowie einen entlang und/oder innerhalb des Stators (80) führbaren Läufer (81) umfasst, wobei das Bodenteil (7) an einem den Formteilen (4, 6) zugewandten Läuferende (81A) lösbar oder unlösbar positioniert ist, und wobei der Läufer (81) stufenlos entlang und/oder innerhalb des Stators (80) hin und her beweglich ist,
**dadurch gekennzeichnet, dass**
das Bodenteil (7) an einem den Formteilen (4, 6) zugewandten Läuferende (81A) lösbar oder unlösbar in Form einer schwimmenden Lagerung, positioniert ist

2. Vorrichtung (1) nach Anspruch 1,
**dadurch gekennzeichnet, dass**
der Stator (80) feststehend ist, während der Läufer (81) direkt mit dem Bodenteil (7) verbunden ist und bewegt wird.

3. Vorrichtung (1) nach zumindest einem der vorhergehenden Ansprüche,
**dadurch gekennzeichnet, dass**
neben dem Läufer (81) zumindest ein Führungselement (82) in Hubrichtung (100) verschiebebeweglich innerhalb oder entlang der Halterung (9) angeordnet ist, wobei das Führungselement (82), insbesondere nur, eine Führung zum Entlangführen des Bodenteils (7) in der Hubrichtung (100) ist.

4. Vorrichtung (1) nach dem vorhergehenden Anspruch,
**dadurch gekennzeichnet, dass**
das Bodenteil (7) zudem an einem den Formteilen (4, 6) zugewandten Führungselementende lösbar oder unlösbar, insbesondere in Form einer schwimmenden Lagerung, positioniert ist.

5. Vorrichtung (1) nach Anspruch 2 oder 3,
**dadurch gekennzeichnet, dass**
das Führungselement (82) lateral neben dem Stator (80) und/oder dem Läufer (81) schiebebeweglich in Hubrichtung (100) angeordnet ist.

6. Vorrichtung (1) nach zumindest einem der Ansprüche 2 bis4,
**dadurch gekennzeichnet, dass**
der Läufer (81) und/oder das Führungselement (82) stabförmig ausgebildet sind, wobei zumindest das Führungselement (82) in Hubrichtung (100) vollständig durch die Halterung (9) hindurchführbar ist.

7. Vorrichtung (1) nach zumindest einem der vorhergehenden Ansprüche,
**dadurch gekennzeichnet, dass**
eine Steuerung des Bodenteils (7) abhängig von einer Steuerung der Formteile (4, 6) betrieben ist.

8. Vorrichtung (1) nach zumindest einem der vorhergehenden Ansprüche,
**dadurch gekennzeichnet, dass**
je Blasstation eine Steuereinheit zur Steuerung des Bodenteils (7) vorgesehen ist.

9. Vorrichtung (1) nach zumindest einer der vorhergehenden Ansprüche,
**gekennzeichnet durch**,
eine Energiespeichereinrichtung (10), in welcher eine durch eine Bewegung des Bodenteils (7) in Richtung weg von den Formteilen (4, 6) frei gewordene mechanische und/oder elektrische Energie zumindest zeitweise speicherbar ist, und von der Energiespeichereinrichtung (10) zum Erzeugen einer Hubbewegung des Bodenteils (7) in Richtung der Formteile (4,6) diese mechanische und/oder elektrische Energie wieder in die Antriebseinrichtung (8) zum Erzeugen einspeisbar ist.

10. Verfahren zum Umformen von Kunststoffvorformlingen zu Kunststoffbehältnissen mit wenigstens einer Blasform (2), wobei die Blasform ein erstes Formteil (4) und ein zweites Formteil (6) umfasst, wobei das erste Formteil (4) und das zweite Formteil (6) mittels einer ersten Antriebseinrichtung (5) von einem geöffneten in einen geschlossen Zustand bewegt werden, und wobei die Blasform (2) ein Bodenteil (7) umfasst, welches gegenüber den Formteilen (4, 6) entlang einer zur Längsachse der Formteile (4, 6) parallel verlaufenden Hubrichtung (100) bewegt wird, um einen Hohlraum, in der geschlossenen Stellung, in der Hubrichtung (100) abzuschließen, und wobei innerhalb des Hohlraums ein Kunststoffvorformling unmittelbar mit einem gasförmigen Medium druckbeaufschlagt wird,
wobei,
wenigstens eine zweite Antriebseinrichtung (8), welche in Form eines elektrischen Linearantriebs ausgestaltet ist, und welche das Bodenteil (7) relativ zu den Formteilen (4, 6) in der Hubrichtung (100) bewegt vorgesehen ist, **dadurch gekennzeichnet, dass** die zweite Antriebseinrichtung (8)
zumindest einen, relativ zu einer gemeinsamen Drehachse der Formteile (4, 6) ortsfest positionierten Stator (80), sowie einen entlang und/oder innerhalb des Stators (80) führbaren Läufer (81) umfasst, wobei das Bodenteil (7) an einem den Formteilen (4, 6) zugewandten Läuferende (81A) lösbar oder unlösbar positioniert ist, und wobei der Läufer (81) stufenlos entlang und/oder innerhalb des Stators (80) hin und her beweglich ist,
**dadurch gekennzeichnet, dass**
das Bodenteil (7) an einem den Formteilen (4, 6) zugewandten Läuferende (81A) lösbar oder unlösbar in Form einer schwimmenden Lagerung, positioniert ist.

## Claims

1. An apparatus (1) for shaping plastics material pre-forms into plastics material containers, with at least one blow mould (2), wherein the blow mould comprises a first mould part (4) and a second mould part (6), wherein the first mould part (4) and the second mould part (6) are movable with respect to each other between a closed setting and an opened setting by means of a first drive device (5), and wherein the blow mould (2) comprises a base part (7) which is movable with respect to the mould parts (4, 6) along a lifting direction (100) extending parallel to the longitudinal axis of the mould parts (4, 6), in order to close off a cavity, in the closed setting, in the lifting direction (100), and wherein a plastics material pre-form is capable of being directly acted upon with pressure by a gaseous medium inside the cavity,
wherein at least one second drive device (8) which is designed in the form of an electric linear drive and which is set up and provided to move the base part (7) relative to the mould parts (4, 6) in the lifting direction (100) is provided, **characterized in that**
the second drive device (8) comprises at least one stator (80) positioned in a stationary manner relative to a common axis of rotation of the mould parts (4, 6), and one rotor (81) capable of being conveyed along and/or inside the stator (80), wherein the base part (7) is positioned in a releasable or non-releasable manner on an end (81A) of the rotor facing the mould parts (4, 6), and wherein the rotor (81) is movable continuously in a reciprocation manner along and/or inside the stator (80),
**characterized in that**
the base part (7) is positioned in the form of a floating mounting, in a releasable or non-releasable manner on an end (81A) of the rotor facing the mould parts (4, 6).

2. An apparatus (1) according to claim 1,
**characterized in that**
the stator (80) is stationary, whilst the rotor (81) is connected directly to the base plate (7) and is moved.

3. An apparatus (1) according to at least one of the preceding claims,
**characterized in that**
at least one guiding element (82) is arranged adjacent to the rotor (81) so as to be movable in a displaceable manner in the lifting direction (100) or is arranged inside or along the holding means (9), wherein the guiding element (82) is, in particular, only a guide for guiding along the base part (7) in the lifting direction (100).

4. An apparatus (1) according to the preceding claim,
**characterized in that**
the base part (7) is additionally positioned in a releasable or non-releasable manner, in particular in the form of a floating mounting, on an end of the guiding element facing the mould parts (4, 6).

5. An apparatus (1) according to claim 2 or 3,
**characterized in that**
the guiding element (82) is arranged laterally adjacent to the stator (80) and/or the rotor (81) so as to be movable in a displaceable manner in the lifting direction (100).

6. An apparatus (1) according to at least one of claims 2 to 4,
**characterized in that**
the rotor (81) and/or the guiding element (82) are designed in the form of a rod, wherein at least the guiding element (82) is capable of being guided completely through the holding means (9) in the lifting direction (100).

7. An apparatus (1) according to at least one of the preceding claims,
**characterized in that**
a control of the base part (7) is operated in a manner dependent upon a control of the mould parts (4, 6).

8. An apparatus (1) according to at least one of the preceding claims,
**characterized in that**
one control unit for controlling the base part (7) is provided per blow moulding station.

9. An apparatus (1) according to at least one of the preceding claims,
**characterized by**
an energy storage device (10) in which mechanical and/or electrical energy released by a movement of the base part (7) in a direction away from the mould parts (4, 6) is capable of being stored at least for a time, and this mechanical and/or electrical energy is capable of being fed into the drive device (8) again by the energy storage device (10) in order to produce a lifting movement of the base part (7) in the direction of the mould parts (4, 6).

10. A method of shaping plastics material preforms into plastics material containers, with at least one blow mould (2), wherein the blow mould comprises a first mould part (4) and a second mould part (6), wherein the first mould part (4) and the second mould part (6) are moved from an opened state into a closed state by means of a first drive device (5), and wherein the blow mould (2) comprises a base part (7) which is moved with respect to the mould parts (4, 6) along a lifting direction (100) extending parallel to the longitudinal axis of the mould parts (4, 6), in order to close off a cavity in the closed setting in the lifting direction (100), and wherein a plastics material preform is directly acted upon with pressure by a gaseous medium inside the cavity,
wherein at least one second drive device (8) which is designed in the form of an electric linear drive and which moves the base part (7) in the lifting direction (100) relative to the mould parts (4, 6) is provided,
**characterized in that**
the second drive device (8) comprises at least one stator (80) positioned in a stationary manner relative to a common axis of rotation of the mould parts (4, 6), and one rotor (81) capable of being conveyed along and/or inside the stator (80), wherein the base part (7) is positioned in a releasable or non-releasable manner on an end (81A) of the rotor facing the mould parts (4, 6), and wherein the rotor (81) is movable continuously in a reciprocation manner along and/or inside the stator (80),
**characterized in that**
the base part (7) is positioned in the form of a floating mounting, in a releasable or non-releasable manner on an end (81A) of the rotor facing the mould parts (4, 6).

## Revendications

1. Dispositif (1) de transformation d'ébauches en matière plastique en récipients en matière plastique avec au moins un moule de soufflage (2), dans lequel le moule de soufflage comprend une première partie de moule (4) et une deuxième partie de moule (6), dans lequel la première partie de moule (4) et la deuxième partie de moule (6) peuvent être déplacées l'une par rapport à l'autre entre une position fermée et une position ouverte au moyen d'un premier dispositif d'entraînement (5), et dans lequel le moule de soufflage (2) comprend une partie de fond (7), qui est mobile par rapport aux parties de moule (4, 6) le long d'un sens de course (100) s'étendant parallèlement à l'axe longitudinal des parties de moule (4, 6) pour fermer une cavité, dans la position fermée, dans le sens de course (100), et dans lequel une ébauche en matière plastique peut être mise sous pression directement avec un milieu gazeux à l'intérieur de la cavité,
dans lequel au moins un deuxième dispositif d'entraînement (8), qui est configuré sous forme d'entraînement linéaire électrique, et qui est aménagé et est prévu pour déplacer la partie de fond (7) par rapport aux parties de moule (4, 6) dans le sens de course (100), **caractérisé en ce que**
le deuxième dispositif d'entraînement (8) comprend au moins un stator (80) positionné fixement par rapport à un axe de rotation commun des parties de moule (4, 6), ainsi qu'un rotor (81) pouvant être guidé le long et/ou à l'intérieur du stator (80), dans lequel la partie de fond (7) est positionnée de manière amovible ou inamovible au niveau d'une extrémité de rotor (81A) tournée vers les parties de moule (4, 6), et dans lequel le rotor (81) est mobile en va-et-vient en continu le long et/ou à l'intérieur du stator (80),
**caractérisé en ce que**
la partie de fond (7) est positionnée sous forme de logement flottant de manière amovible ou inamovible au niveau d'une extrémité de rotor (81A) tournée vers les parties de moule (4, 6).

2. Dispositif (1) selon la revendication 1,
**caractérisé en ce que**
le stator (80) est fixe, pendant que le rotor (81) est relié directement à la partie de fond (7) et déplacé.

3. Dispositif (1) selon au moins l'une quelconque des revendications précédentes,
**caractérisé en ce que**
à côté du rotor (81), au moins un élément de guidage (82) est agencé à l'intérieur ou le long du support (9) de manière mobile en translation dans le sens de course (100), dans lequel l'élément de guidage (82) est, en particulier seulement, un guidage pour guider la partie de fond (7) dans le sens de course (100).

4. Dispositif (1) selon la revendication précédente,
**caractérisé en ce que**
la partie de fond (7) est positionnée en outre, en particulier sous forme de logement flottant, de manière amovible ou inamovible au niveau d'extrémités d'élément de guidage tournées vers une des parties de moule (4, 6).

5. Dispositif (1) selon la revendication 2 ou 3,
**caractérisé en ce que**
l'élément de guidage (82) est agencé latéralement à côté du stator (80) et/ou du rotor (81) mobile par glissement dans le sens de course (100).

6. Dispositif (1) selon au moins l'une quelconque des revendications 2 à 4,
**caractérisé en ce que**
le rotor (81) et/ou l'élément de guidage (82) sont réalisés en forme de tige, dans lequel au moins l'élément de guidage (82) peut être guidé complètement à travers le support (9) dans le sens de course (100).

7. Dispositif (1) selon au moins l'une quelconque des revendications précédentes,
**caractérisé en ce que**
la commande de la partie de fond (7) est exploitée en fonction d'une commande des parties de moule (4, 6).

8. Dispositif (1) selon au moins l'une quelconque des revendications précédentes,
**caractérisé en ce que**
une unité de commande pour la commande de la partie de fond (7) est prévue pour chaque station de soufflage.

9. Dispositif (1) selon au moins l'une quelconque des revendications précédentes,
**caractérisé par**
un dispositif d'accumulation d'énergie (10), dans lequel une énergie électrique et/ou mécanique libérée par un mouvement de la partie de fond (7) dans la direction s'éloignant des parties de moule (4, 6) peut être accumulée au moins temporairement, et cette énergie mécanique et/ou électrique peut à nouveau être alimentée dans le dispositif d'entraînement (8) pour la génération par le dispositif d'accumulation d'énergie (10) pour la génération d'un mouvement de course de la partie de fond (7) dans la direction des parties de moule (4, 6).

10. Procédé de transformation d'ébauches en matière plastique en récipients en matière plastique avec au moins un moule de soufflage (2), dans lequel le moule de soufflage comprend une première partie de moule (4) et une deuxième partie de moule (6), dans lequel la première partie de moule (4) et la deuxième partie de moule (6) sont déplacées d'un état ouvert à un état fermé au moyen d'un premier dispositif d'entraînement (5), et dans lequel le moule de soufflage (2) comprend une partie de fond (7), qui est déplacée par rapport aux parties de moule (4, 6) le long d'un sens de course (100) s'étendant parallèlement à l'axe longitudinal des parties de moule (4, 6) pour fermer une cavité, dans la position fermée, dans le sens de course (100), et dans lequel une ébauche en matière plastique peut être mise sous pression directement avec un milieu gazeux à l'intérieur de la cavité,
dans lequel au moins un deuxième dispositif d'entraînement (8), qui est configuré sous forme d'entraînement linéaire électrique, et qui déplace la partie de fond (7) par rapport aux parties de moule (4, 6) dans le sens de course (100) est prévu, **caractérisé en ce que**
le deuxième dispositif d'entraînement (8) comprend au moins un stator (80) positionné fixement par rapport à un axe de rotation commun des parties de moule (4, 6), ainsi qu'un rotor (81) pouvant être guidé le long et/ou à l'intérieur du stator (80), dans lequel la partie de fond (7) est positionnée de manière amovible ou inamovible au niveau d'une extrémité de rotor (81A) tournée vers les parties de moule (4, 6), et dans lequel le rotor (81) est mobile en va-et-vient en continu le long et/ou à l'intérieur du stator (80),
**caractérisé en ce que**
la partie de fond (7) est positionnée sous forme de logement flottant de manière amovible ou inamovible au niveau d'une extrémité de rotor (81A) tournée vers les parties de moule (4, 6).
